# EUROPEAN PATENT SPECIFICATION

(11) **EP 2 875 925 B1**
(45) Date of publication and mention of the grant of the patent: **15.06.2016**
(21) Application number: 14184625.3
(22) Date of filing: 12.09.2014
(51) Int. Cl.: B29C 33/00

(54) **Injection molding machine**
Spritzgießmaschine
Machine de moulage à injection

(30) Priority: 21.11.2013 JP 2013241230
(43) Date of publication of application: 27.05.2015
(73) Proprietor: SUMITOMO HEAVY INDUSTRIES, LTD., Tokyo 141-6025 (JP)
(72) Inventor: Tamura, Atsuro, Chiba 263-0001 (JP); Haneishi, Shinya, Chiba 263-0001 (JP); Araki, Yasuyuki, Chiba 263-0001 (JP)
(74) Representative: Louis Pöhlau Lohrentz

(56) References cited:
- JP-A- H1 086 196
- JP-A- 2009 154 454
- Annonymous: "BRAINSTORMING beginning the design process", , 7 December 2010 (2010-12-07), pages 1-27, XP055159855, Retrieved from the Internet: URL:http://www.ustsubaki.com/pdf/KabelSchl epp-03-Brainstorming.pdf [retrieved on 2014-12-22]

## Description

### BACKGROUND OF THE INVENTION

### Field of the Invention

The present invention relates to an injection molding machine.

### Description of Related Art

An injection molding machine has wiring such as an electric wire and piping such as air piping or oil piping (refer to, for example, Japanese Patent Application Publication No. 2013-132807). The wiring and the piping may be disposed between a stationary section and a movable section which moves with respect to the stationary section and may be deformed according to the movement of the movable section with respect to the stationary section. JPH 1086196 discloses the use of cable guides.

In the related art, an installation space of a flexible member which retains at least one of the wiring and the piping is large, and thus balance is poor.

### SUMMARY OF THE INVENTION

The present invention has been made in view of the above-described problem and has an object to provide an injection molding machine in which an installation space of a flexible member can be reduced and balance can be improved.

In order to solve the above-described problem, according to an aspect of the present invention, there is provided an injection molding machine including according to claim 1.

According to the present invention, an injection molding machine is provided in which an installation space of a flexible member can be reduced and balance can be improved.

### BRIEF DESCRIPTION OF THE DRAWINGS

Fig. 1 is a diagram showing a state at the time of the mold closing completion of an injection molding machine according to an embodiment of the present invention.
Fig. 2 is a diagram showing a state at the time of the mold opening completion of the injection molding machine according to the embodiment of the present invention.
Fig. 3 is a diagram showing a state at the time of the mold closing completion of an injection molding machine according to a first modified example.
Fig. 4 is a diagram showing a state at the time of the mold opening completion of the injection molding machine according to the first modified example.
Fig. 5 is a diagram showing a state at the time of the mold closing completion of an injection molding machine according to a second modified example.
Fig. 6 is a diagram showing a state at the time of the mold opening completion of the injection molding machine according to the second modified example.

### DETAILED DESCRIPTION OF THE INVENTION

Hereinafter, a mode for carrying out the present invention will be described with reference to drawings. However, in each of the drawings, the same or corresponding configuration is denoted by the same or corresponding reference numeral and thus, a description thereof is omitted. Further, a description will be made regarding a moving direction of a movable platen when performing mold closing as a front and a moving direction of the movable platen when performing mold opening as a rear.

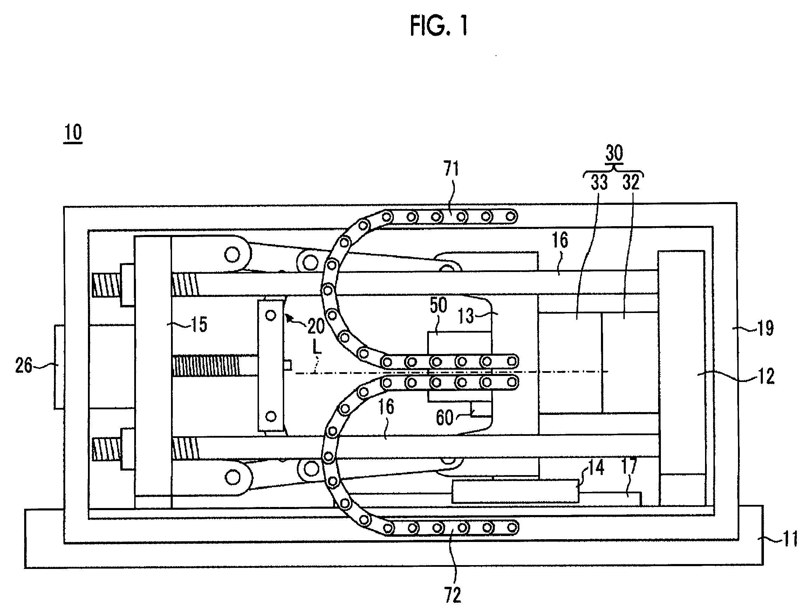

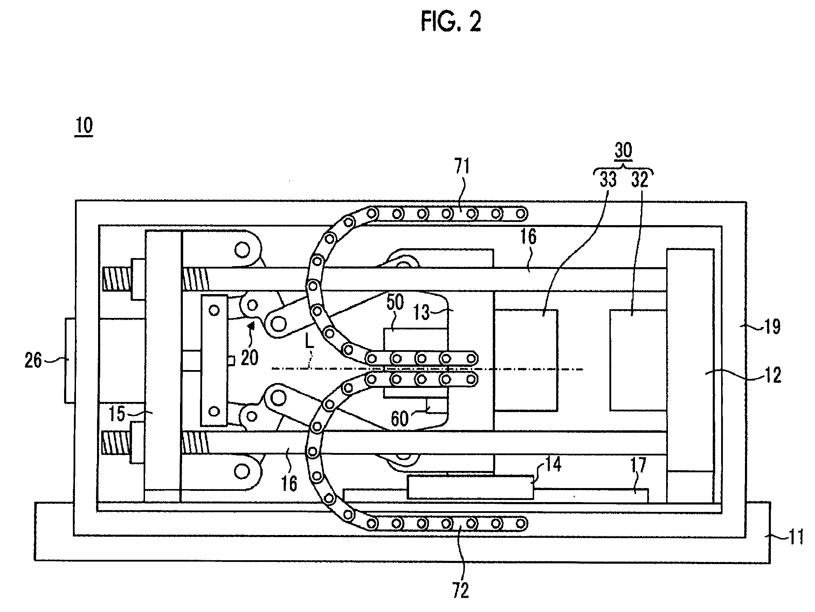

Fig. 1 is a diagram showing a state at the time of the mold closing completion of an injection molding machine according to an embodiment of the present invention. Fig. 2 is a diagram showing a state at the time of the mold opening completion of the injection molding machine according to the embodiment of the present invention.

An injection molding machine 10 performs mold closing, mold clamping, and mold opening of a mold unit 30. The mold unit 30 is configured to include, for example, a stationary mold 32 and a movable mold 33. The injection molding machine 10 has a frame 11, a stationary platen 12, a movable platen 13, a support 15, a tie bar 16, a toggle mechanism 20, a mold clamping motor 26, an ejector unit 50, and an air blowing unit 60.

The stationary platen 12 is fixed to the frame 11. The stationary mold 32 is mounted on a mold mounting surface of the stationary platen 12.

The movable platen 13 is fixed to a guide block 14 that is movable along a guide (for example, a guide rail) 17 which is laid on the frame 11. In this way, the movable platen 13 can advance and retreat with respect to the frame 11 between the stationary platen 12 and the support 15. The movable mold 33 is mounted on a mold mounting surface of the movable platen 13.

The support 15 is connected to the stationary platen 12 through a plurality of (for example, four) tie bars 16 and placed on the frame 11 so as to be movable in a mold opening and closing direction. In addition, the support 15 may be fixed to a guide block that is movable along a guide laid on the frame 11. The guide of the support 15 may be shared by the guide 17 of the movable platen 13.

In addition, in this embodiment, the stationary platen 12 is fixed to the frame 11 and the support 15 is movable with respect to the frame 11 in the mold opening and closing direction. However, a configuration is also acceptable in which the support 15 is fixed to the frame 11 and the stationary platen 12 is movable with respect to the frame 11 in the mold opening and closing direction.

The toggle mechanism 20 is disposed between the movable platen 13 and the support 15. The toggle mechanism 20 is configured with a link which is mounted on the movable platen 13 so as to be able to oscillate, a link which is mounted on the support 15 so as to be able to oscillate, and the like. The toggle mechanism 20 extends and retracts in the mold opening and closing direction, whereby the movable platen 13 advances and retreats with respect to the support 15.

The mold clamping motor 26 is a drive source which operates the toggle mechanism 20. A ball screw mechanism as a motion conversion section which converts rotary motion of the mold clamping motor 26 into linear motion and transmits the linear motion to the toggle mechanism 20 is provided between the mold clamping motor 26 and the toggle mechanism 20.

The ejector unit 50 sticks a molding product out from the mold unit 30 after the mold opening. The ejector unit 50 is mounted on, for example, the movable platen 13. The ejector unit 50 may have a common conf igurat ion and may be anyone type of an electrical type, a hydraulic type, and a type using both electricity and hydraulic pressure.

The air blowing unit 60 removes the molding product from the mold unit 30 by air pressure. The air blowing unit 60 is mounted on the movable platen 13. The air blowing unit 60 may have a common configuration.

Next, an operation of the injection molding machine 10 will be described. An operation of the injection molding machine 10 is controlled by a controller. The controller has a storage section such as a memory and a CPU and executes a control program stored in the storage section in the CPU, thereby controlling an operation of the injection molding machine 10.

The mold clamping motor 26 is driven in a mold opening completion state, thereby operating the toggle mechanism 20, and thus the movable platen 13 advances, whereby the mold closing is performed. The movable mold 33 and the stationary mold 32 come into contact with each other, as shown in Fig. 1, whereby the mold closing is completed.

Subsequently, the mold clamping motor 26 is driven, and thus a mold clamping force which is obtained by multiplying toggle magnification by a propulsive force by the mold clamping motor 26 is generated, whereby the mold clamping is performed. A cavity (not shown) is formed between the stationary mold 32 and the movable mold 33 in a mold clamping state. A liquid molding material filled in the cavity is solidified and extracted as a molding product after the mold opening.

Subsequently, the mold clamping motor 26 is driven, thereby operating the toggle mechanism 20, and thus the movable platen 13 retreats, whereby the mold opening is performed. Thereafter, the ejector unit 50 sticks the molding product out from the movable mold 33. Subsequently, the air blowing unit 60 removes the molding product from the movable mold 33 by air pressure.

In addition, in this embodiment, the mold opening and closing and the mold clamping are performed by driving the mold clamping motor 26. However, in place of the mold clamping motor 26, a hydraulic cylinder may be used. Further, a configuration is also acceptable in which a linear motor is used for the mold opening and closing and an electromagnet is used for the mold clamping.

Incidentally, the ejector unit 50, the air blowing unit 60, and the toggle mechanism 20 are mounted on the movable platen 13. In a case where the ejector unit 50 is an electrical type, an electric wire is connected to the ejector unit 50, and in a case of being a hydraulic type, oil piping is connected to the ejector unit 50, and in a case of being a type using both electricity and oil pressure, both the electric wire and the oil piping are connected to the ejector unit 50. Air piping is connected to the air blowing unit 60. Piping for lubrication is connected to the toggle mechanism 20.

As a flexible member that retains at least one of the wiring and the piping, cableveyors 71 and 72 are used. A "cableveyor" is a registered trademark. In addition, as the flexible member, in place of the cableveyor, a flexible hose can also be used. In the following, the wiring and the piping are referred to collectively as a linear member.

Each of the cableveyors 71 and 72 is connected to a door frame 19 as a stationary section at one end and connected to the movable platen 13 as a movable section at the other end. The door frame 19 is a frame on which a safety door is mounted. If the safety door is opened, a predetermined operation of the inj ectionmoldingmachine is prohibited or interrupted. The door frame 19 is fixed to the frame 11. In addition, the door frame 19 may be provided as a portion of the frame 11.

Each of the cableveyors 71 and 72 is deformed according to the movement of the movable platen 13 with respect to the door frame 19. Curved portions of the cableveyors 71 and 72 may keep a predetermined radius of curvature regardless of the position of the movable platen 13 with respect to the door frame 19. Damage to the linear member can be restricted.

Each of the cableveyors 71 and 72 may retain a plurality of linear members. The plurality of linear members which are retained by a single cableveyor may be arranged in a row so as to be curved at the same radius of curvature.

Each of the cableveyors 71 and 72 may be connected to a bracket which is provided on the side surface of the movable platen 13. The bracket may be provided on either the side surface on the operation side of the movable platen 13 or the side surface of the anti-operation side of the movable platen 13. The operation side refers to the operation panel side which receives an input operation by a user, and the anti-operation side refers to the opposite side of the operation side.

The plurality of cableveyors 71 and 72 are disposed on the same plane and deformed in the same plane according to the movement of the movable platen 13 with respect to the door frame 19. Compared to a case where the linear members which are retained by the plurality of cableveyors 71 and 72 are retained by a single cableveyor, the width of the cableveyor is narrowed, and thus an installation space can be reduced. Further, it is possible to increase the number of accommodated linear members without increasing the installation space.

The cableveyor 71 on the upper side and the cableveyor 72 on the lower side are disposed to face each other, as shown in Figs. 1 and 2. Therefore, balance is good.

Regardless of the position of the movable platen 13 with respect to the door frame 19, the cableveyor 71 on the upper side and the cableveyor 72 on the lower side become line-symmetrical with a reference line L parallel to a moving direction of the movable platen 13 as the center, as shown in Figs. 1 and 2. Since the cableveyor 71 on the upper side and the cableveyor 72 on the lower side are always symmetrical, balance is good.

In addition, the cableveyor 71 on the upper side and the cableveyor 72 on the lower side have the same size and are symmetrical. However, the cableveyor 71 on the upper side and the cableveyor 72 on the lower side may have different sizes and be disposed with deformed symmetry.

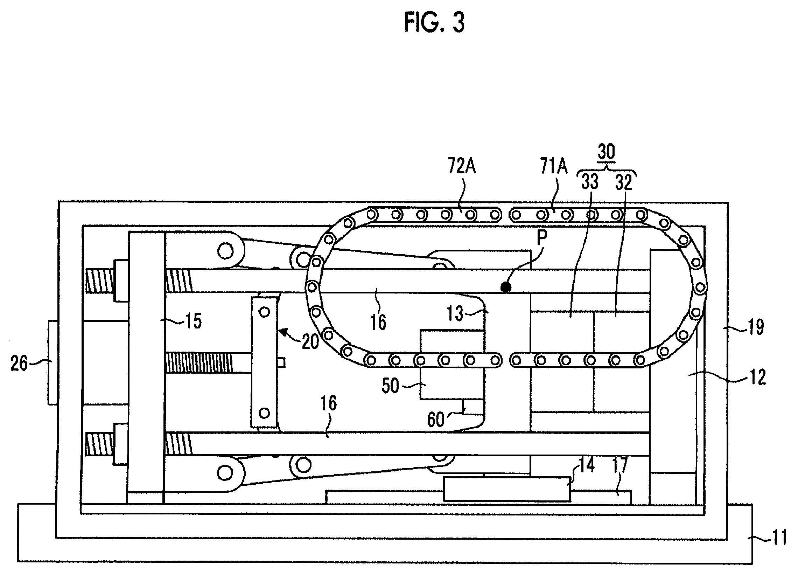

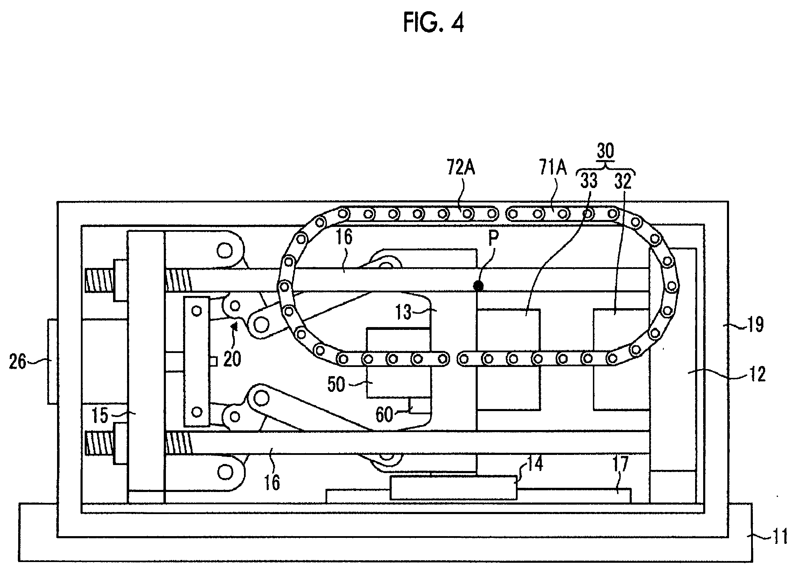

Fig. 3 is a diagram showing a state at the time of the mold closing completion of an injection molding machine according to a first modified example. Fig. 4 is a diagram showing a state at the time of the mold opening completion of the injection molding machine according to the first modified example.

Each of the cableveyors 71A and 72A is connected to the door frame 19 at one end and connected to the movable platen 13 at the other end. Each of cableveyors 71A and 72A is deformed according to the movement of the movable platen 13 with respect to the door frame 19.

The plurality of cableveyors 71A and 72A are disposed on the same plane and deformed in the same plane according to the movement of the movable platen 13 with respect to the door frame 19. Therefore, the widths of the cableveyors 71A and 72A are narrow, and thus an installation space can be reduced. Further, it is possible to increase the number of accommodated linear members without increasing the installation space.

The cableveyor 71A on the front side and the cableveyor 72A on the rear side are disposed to face each other, as shown in Figs. 3 and 4. Therefore, balance is good.

Regardless of the position of the movable platen 13 with respect to the door frame 19, the cableveyor 71A on the front side and the cableveyor 72A on the rear side become point-symmetrical with a reference point P as the center. The reference point P is located at the center of an annular cableveyor group which is configured with the cableveyor 71A on the front side and the cableveyor 72A on the rear side. The position of the reference point P may be changed according to the position of the movable platen 13 with respect to the door frame 19. Since the cableveyor 71A on the front side and the cableveyor 72A on the rear side are always symmetrical, balance is good.

In addition, the cableveyor 71A on the front side and the cableveyor 72A on the rear side have the same size and are symmetrical. However, the cableveyor 71A on the front side and the cableveyor 72A on the rear side may have different sizes and be disposed with deformed symmetry.

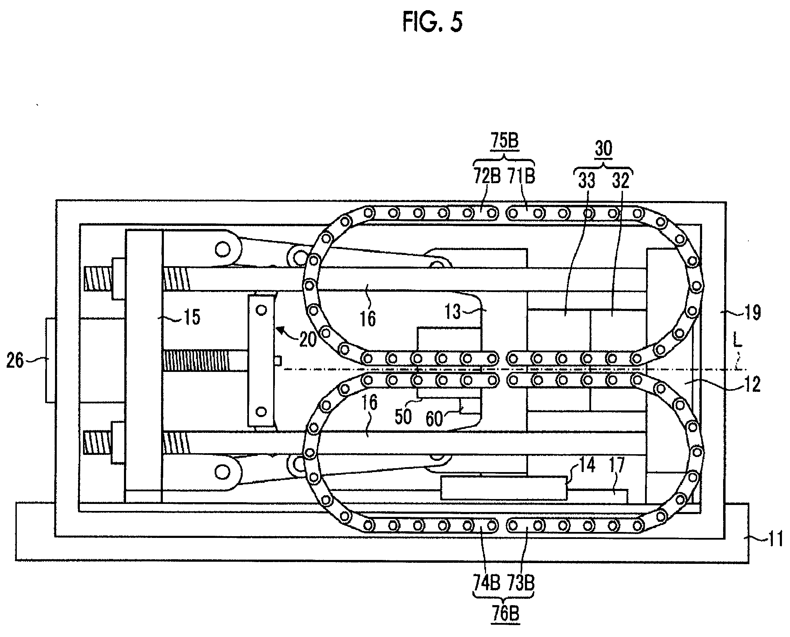

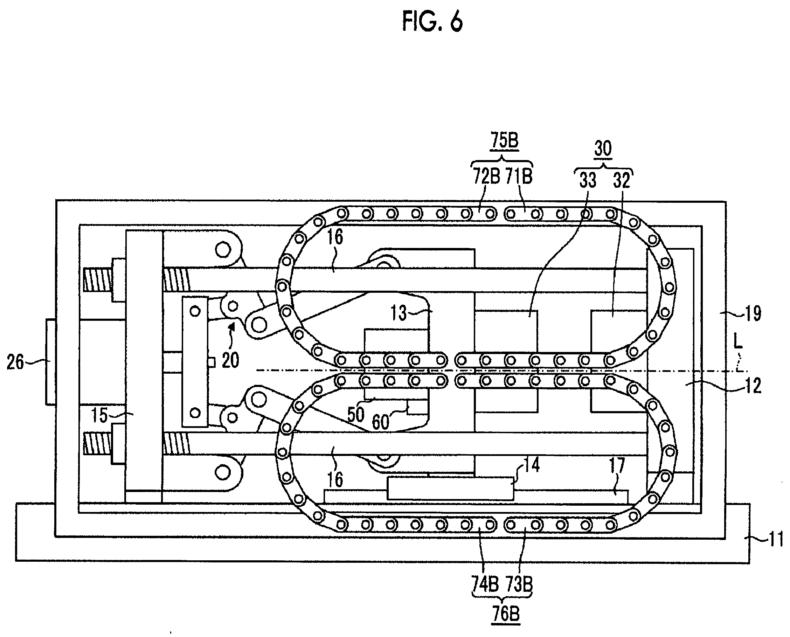

Fig. 5 is a diagram showing a state at the time of the mold closing completion of an injection molding machine according to a second modified example. Fig. 6 is a diagram showing a state at the time of the mold opening completion of the injection molding machine according to the second modified example.

Each of the cableveyors 71B, 72B, 73B, and 74B is connected to the door frame 19 at one end and connected to the movable platen 13 at the other end. Each of cableveyors 71B, 72B, 73B, and 74B is deformed according to the movement of the movable platen 13 with respect to the door frame 19.

The plurality of cableveyors 71B, 72B, 73B, and 74B are disposed on the same plane and deformed in the same plane according to the movement of the movable platen 13 with respect to the door frame 19. Therefore, the widths of the cableveyors 71B, 72B, 73B, and 74B are narrow, and thus an installation space can be reduced. Further, it is possible to increase the number of accommodated linear members without increasing the installation space.

The cableveyor 71B on the upper front side and the cableveyor 72B on the upper rear side are disposed to face each other, and the cableveyor 73B on the lower front side and the cableveyor 74B on the lower rear side are disposed to face each other. Further, the cableveyor 71B on the upper front side and the cableveyor 73B on the lower front side are disposed to face each other, and the cableveyor 72B on the upper rear side and the cableveyor 74B on the lower rear side are disposed to face each other. In addition, the cableveyor 71B on the upper front side and the cableveyor 74B on the lower rear side are disposed to face each other, and the cableveyor 72B on the upper rear side and the cableveyor 73B on the lower front side are disposed to face each other. Therefore, balance is good. In addition, if at least two of the plurality of cableveyors which are disposed on the same plane are disposed to face each other, balance canbe improved.

Regardless of the position of the movable platen 13 with respect to the door frame 19, a cableveyor group 75B on the upper side and a cableveyor group 76B on the lower side become line-symmetrical with the reference line L parallel to the moving direction of the movable platen 13 as the center. The cableveyor group 75B on the upper side is configured with the cableveyor 71B on the upper front side and the cableveyor 72B on the upper rear side. The cableveyor group 76B on the lower side is configured with the cableveyor 73B on the lower front side and the cableveyor 74B on the lower rear side. Since the cableveyor group 75B on the upper side and the cableveyor group 76B on the lower side are always symmetrical, balance is good.

The cableveyor 71B on the upper front side and the cableveyor 72B on the upper rear side are always point-symmetrical, and the cableveyor 73B on the lower front side and the cableveyor 74B on the lower rear side are always point - symmetrical. Further, the cableveyor 71B on the upper front side and the cableveyor 73B on the lower front side are always line-symmetrical, and the cableveyor 72B on the upper rear side and the cableveyor 74B on the lower rear side are always line-symmetrical. In addition, if at least two of the plurality of cableveyors which are connected to the movable section are symmetrical regardless of the position of the movable section with respect to the stationary section, balance can be improved.

In addition, the cableveyor 71B on the upper front side and the cableveyor 72B on the upper rear side have the same size and are symmetrical. However, the cableveyor 71B on the upper front side and the cableveyor 72B on the upper rear side may have different sizes and be disposed with deformed symmetry. The same applies to the cableveyors of the other combination.

The embodiment of the injection molding machine has been described above. However, the present invention is not limited to the embodiment described above, and various modifications and substitutions can be made within the scope of the concept of the present invention stated in the appended claims.

For example, the injection molding machine of the above-described embodiment is a horizontal type in which a molding opening and closing direction is a horizontal direction. However, the injection molding machine may be a vertical type in which a molding opening and closing direction is an up-and-down direction.

Further, the number or the disposition of cableveyors is not particularly limited. For example, only the cableveyor 71B on the upper front side and the cableveyor 74B on the lower rear side shown in Figs. 5 and 6 may be used. The cableveyor 71B on the upper front side and the cableveyor 74B on the lower rear side can be deformed in the same plane and are disposed to face each other. For this reason, an installation space can be reduced and balance is good. Further, it is possible to increase the number of accommodated linear members without increasing the installation space.

Further, the size of the cableveyor is not particularly limited. The plurality of cableveyors which are disposed to face each other may have the same size and may also have different sizes. For example, the cableveyor 71 on the upper side and the cableveyor 72 on the lower side shown in Figs. 1 and 2 have the same size. However, the cableveyor 71 on the upper side and the cableveyor 72 on the lower side may have different sizes. The same applies to the first modified example and the second modified example.

Further, the type of the movable section or the stationary section to which the cableveyors are connected is not particularly limited. The cableveyor shown in Figs. 1 to 6 is used in the mold clamping unit which performs the mold opening and closing and the mold clamping. However, the cableveyor may be used in an injection unit which fills a mold unit with a liquid molding material. Further, in a case where an electromagnet is used for the molding clamping, one end of the cableveyor may be connected to an attraction plate which is attracted by an electromagnet.

## Claims

1. An injection molding machine comprising:
a plurality of flexible members (71, 72; 71 A, 72A; or 71B, 72B, 73B, 74B), each of which is connected to a stationary section (19) at one end and connected to a movable section (13) at the other end,
wherein the plurality of flexible members retain at least one of wiring and piping, **characterized in that** said plurality of flexible members are disposed on the same plane, and are deformed in the same plane according to movement of the movable section (13) with respect to the stationary section (19), and
at least two of the plurality of flexible members which are disposed on the same plane are disposed to face each other and
at least two of the plurality of flexible members are connected to the same movable section at the other ends thereof..

2. The injection molding machine according to Claim 1, wherein at least two of the plurality of flexible members (71, 72; 71A, 72A; or 71B, 72B, 73B, 74B) which are connected to the movable section (13) are symmetrical regardless of a position of the movable section (13) with respect to the stationary section (19).

## Patentansprüche

1. Spritzgießmaschine, umfassend:
eine Mehrzahl von flexiblen Bauteilen (71, 72, 71A, 72A oder 71 B, 72B, 73B, 74B), von denen jedes an einem Ende mit einem feststehenden Abschnitt (19) und am anderen Ende mit einem beweglichen Abschnitt (13) verbunden ist,
wobei diese Mehrzahl von flexiblen Bauteilen wenigstens entweder Verkabelung oder Verrohrung aufnehmen,
**dadurch gekennzeichnet, dass** diese Mehrzahl von flexiblen Bauteilen in derselben Ebene angeordnet sind und entsprechend der Bewegung des beweglichen Abschnitts (13) gegenüber dem feststehenden Abschnitt (19) in derselben Ebene verformt werden und
dass wenigstens zwei der Mehrzahl von flexiblen Bauteilen, die in derselben Ebene angeordnet sind, so angeordnet sind, dass sie einander gegenüberliegen und
dass wenigstens zwei der Mehrzahl von flexiblen Bauteilen an ihren anderen Enden mit demselben beweglichen Abschnitt verbunden sind.

2. Spritzgießmaschine nach Anspruch 1, wobei wenigstens zwei der Mehrzahl von flexiblen Bauteilen (71, 72, 71A, 72A oder 71 B, 72B, 73B, 74B), die mit dem beweglichen Abschnitt (13) verbunden sind, unabhängig von einer Position des beweglichen Abschnitts (13) gegenüber dem feststehenden Abschnitt (19) symmetrisch sind.

## Revendications

1. Machine de moulage à injection comprenant :
une pluralité d'éléments flexibles (71, 72 ; 71A, 72A ; ou 71B, 72B, 73B, 74B), dont chacun est raccordé à une section fixe (19) au niveau d'une extrémité et raccordé à une section mobile (13) au niveau de l'autre extrémité,
dans laquelle la pluralité d'éléments flexibles retient au moins l'un parmi un câblage et une tuyauterie, **caractérisée en ce que** ladite pluralité d'éléments flexibles sont disposés sur le même plan, et sont déformés dans le même selon le mouvement de la section mobile (13) par rapport à la section fixe (19), et
au moins deux de la pluralité d'éléments flexibles qui sont disposés sur le même plan, sont disposés pour se faire face, et
au moins deux de la pluralité d'éléments flexibles sont raccordés à la même section mobile au niveau de leurs autres extrémités.

2. Machine de moulage à injection selon la revendication 1, dans laquelle au moins deux de la pluralité d'éléments flexibles (71, 72; 71A, 72A; ou 71B, 72B, 73B, 74B) qui sont raccordés à la section mobile (13), sont symétriques indépendamment d'une position de la section mobile (13) par rapport à la section fixe (19).
